Europäisches Patentamt

European Patent Office

Office européen des brevets

(11) Numéro de publication : **0 343 078 B1**

# (12) FASCICULE DE BREVET EUROPEEN

(45) Date de publication du fascicule du brevet :
**15.04.92 Bulletin 92/16**

(51) Int. Cl.$^5$ : **A23G 1/02, // C12M1/16**

(21) Numéro de dépôt : **89401378.8**

(22) Date de dépôt : **19.05.89**

(54) **Installation pour la fermentation de produits végétaux ou agricoles telles que des graines de cacaoyer et procédé pour réaliser une telle fermentation.**

(30) Priorité : **20.05.88 FR 8806798**

(43) Date de publication de la demande :
**23.11.89 Bulletin 89/47**

(45) Mention de la délivrance du brevet :
**15.04.92 Bulletin 92/16**

(84) Etats contractants désignés :
**DE ES GB IT**

(56) Documents cités :
**CH-A- 375 315**
**FR-A- 2 168 917**
**FR-A- 2 477 381**
**GB-A- 2 021 923**
**OA-A- 5 933**

(73) Titulaire : **CENTRE DE COOPERATION INTERNATIONAL EN RECHERCHE AGRONOMIQUE POUR LE DEVELOPPEMENT**
**42 rue Scheffer**
**F-75016 Paris (FR)**

(72) Inventeur : **Barel, Michel**
**Chemin de la Mine - Saint Paul et Valmalle**
**F-34570 Pignan (FR)**

(74) Mandataire : **Hammond, William et al**
**Cabinet Hammond et Autres 17, rue Pasteur**
**F-92300 Levallois-Perret (FR)**

EP 0 343 078 B1

Jouve, 18, rue Saint-Denis, 75001 PARIS

## Description

La présente invention est relative à une installation pour réaliser une fermentation anaérobie suivie d'une fermentation aérobie, ou vice-versa, de produits végétaux ou agricoles, telles que des graines de cacaoyer, aussi appelées fèves de cacao, ainsi qu'à un procédé pour réaliser de telles fermentations.

Le fruit du cacaoyer, ou cabosse, contient un grand nombre de graines dont il est nécessaire d'éliminer la pulpe afin de les rendre utilisables en industrie alimentaire.

Lors de la récolte des cabosses, on récupère les graines qui sont très humides : elles comportent un mucilage, ou pulpe, à base de pectines et de sucres qu'il faut éliminer. Ceci est réalisé par une opération dite de fermentation. Les graines sont mises en tas ou, comme décrit dans le document FR-A-2.427.057, dans des caisses : une fermentation se développe alors après ensemencement de levures.

Cette fermentation comprend principalement deux phases : une première qui est anaérobie et légèrement exothermique, au cours de laquelle les sucres de la pulpe sont transformés par les levures en éthanol; et une seconde qui est aérobie et très exothermique, au cours de laquelle l'éthanol formé précédemment est transformé en acide acétique.

Ainsi, au cours de cette fermentation, la pulpe est-elle éliminée par pectinolyse et, de plus, les précurseurs d'arôme présents dans les cotylédons se développent; de ce fait, on comprend toute l'importance de bien conduire la fermentation décrite ci-dessus, afin de produire des fèves de bonne qualité aromatique et donc appréciées par les industriels.

L'homme du métier a donc cherché depuis une quinzaine d'années à contrôler de telles fermentations anaérobies puis aérobies, notamment dans le cas de graines. Deux techniques ont été envisagées : elles sont décrites dans les documents Fr-A-2.168.917 et FR-A-2.477.381, mais ces procédés de l'art antérieur n'ont pas eu le succès escompté. En effet, il n'a pas été suffisamment tenu compte de la faible technicité de la main d'oeuvre locale, ainsi que des conditions économiques dans les pays producteurs de graines de cacao.

Aussi un des buts de la présente invention est-il de fournir une installation pour réaliser une fermentation anaérobie suivie d'une fermentation aérobie, ou vice-versa, de produits végétaux ou agricoles, telles que des graines de cacaoyer, qui permet de suivre et de contrôler cette fermentation afin d'obtenir des graines de bonne qualité pour l'industrie alimentaire.

Un autre but de l'invention est de procurer une telle installation, qui peut être mise en oeuvre par des personnes même non qualifiées.

Un but supplémentaire de la présente invention est de procurer une telle installation de coût, tant de mise en place que de conduite, compatible avec les données économiques prévalant dans les pays cultivant le cacaoyer.

Ces buts, ainsi que d'autres qui apparaîtront par la suite, sont atteints par une installation pour réaliser une fermentation anaérobie suivie d'une fermentation aérobie, ou vice-versa, de produits végétaux ou agricoles, telles que des graines de cacaoyer, qui est, selon la présente invention, caractérisée par le fait qu'elle comprend une structure centrale haute comportant à son sommet une table dite table supérieure, et deux structures latérales, encadrant cette structure centrale et comportant chacune à leur sommet une table dite table inférieure, la table supérieure et les deux tables inférieures supportant chacune un récipient dénommé respectivement récipient supérieur et récipient inférieur; la table supérieure comportant des moyens supérieurs pour vider le récipient supérieur dans l'un ou l'autre des récipients inférieurs supportés par les tables inférieures; ces tables inférieures comportant chacune des moyens inférieurs pour vider le récipient inférieur correspondant.

Avantageusement, cette installation comporte également un dispositif pour alimenter en produits à fermenter le récipient supérieur ainsi qu'un dispositif d'évacuation dans lequel sont déversés les contenus des récipients inférieurs.

Selon un mode de réalisation préféré de l'invention le récipient supérieur comprend deux parois obliques se faisant face et s'évasant vers le haut à partir du fond de ce récipient; il a de préférence, pour section verticale un trapèze sensiblement isocèle. Chaque récipient inférieur comporte une paroi oblique sensiblement parallèle à l'une des parois obliques du récipient supérieur, et s'évasant vers le haut à partir du fond de ce récipient inférieur; il a, de préférence, pour section verticale un trapèze sensiblement rectangle.

Avantageusement, les moyens supérieurs pour vider le récipient supérieur dans l'un ou l'autre des récipients inférieurs, comprennent, d'une part, deux verins qui sont solidaires par une extrémité de la structure centrale haute et, par leur autre extrémité, du fond du récipient supérieur au voisinage de l'arête formée par ce fond et l'une des parois obliques, ces deux vérins étant disposés en croix, et, d'autre part, deux axes de rotation parallèles à ces mêmes arêtes et disposés sous le fond du récipient supérieur.

Selon un mode de réalisation préféré de l'invention, l'extrémité de chaque vérin, qui est solidaire du fond du récipient, est en fait solidaire d'un axe de rotation, lequel repose dans un profilé creux situé sur la structure centrale haute.

De préférence, les moyens inférieurs pour vider un récipient inférieur, comportent, d'une part, un axe de rotation disposé sur le fond de ce récipient au voisinage de l'arête formée par ce fond et la paroi oblique, et solidaire de ce fond et de la table inférieure, et, d'autre part, un vérin solidaire par une extrémité de la structure latérale correspondante et, par l'autre extrémité, du fond du récipient au voisinage de l'arête opposée à celle proche de l'axe de rotation.

Avantageusement, les récipients supérieur et inférieurs comportent, chacun, au moins une sonde thermométrique reliée à un automate programmable calculant l'intégrale de la courbe de température en fonction du temps, cet automate programmable déclenchant les moyens supérieurs et inférieurs pour vider les récipients correspondants, lorsque l'intégrale atteint une valeur prédéterminée.

Selon un mode de réalisation préféré de la présente invention, les récipients supérieur et inférieur sont constitués chacun par un berceau solidaire du ou des vérins correspondants et articulé sur la table correspondante, et par une caisse reposant dans ce berceau.

De préférence, le dispositif pour alimenter le récipient supérieur est constitué par une bande transporteuse ou par un chargeur-élévateur à godets montés sur rail.

Quant au dispositif pour évacuer les produits contenus dans les récipients inférieurs, il est situé à la base de la structure centrale, et est, par exemple, une bande transporteuse.

La présente invention comprend également un procédé pour réaliser une fermentation anaérobie suivie d'une fermentation aérobie, ou vice-versa, de produits végétaux ou agricoles telles que des graines de cacaoyer, qui comporte les étapes suivantes :

a) on dispose dans un récipient, dit récipient supérieur, une masse de produit dont on mesure continûment la température;

b) on trace la courbe de cette température en fonction du temps;

c) on détermine à tout moment la pente de cette courbe afin d'en détecter le changement de pente;

d) la détection du changement de pente commande le vidage du récipient supérieur dans un autre récipient dit récipient inférieur, dans lequel on mesure continûment la température de la masse de produits;

e) on poursuit le tracé de la courbe de température de l'étape b), et on calcule à tout moment l'intégrale de cette courbe depuis le début dudit procédé;

f) on compare la valeur de cette intégrale à une valeur prédéterminée dite valeur de consigne caractérisant la qualité recherchée du produit; et

g) on vide le récipient inférieur dans un dispositif d'évacuation, lorsque la valeur de l'intégrale calculée à l'étape f) atteint la valeur de consigne.

Avantageusement, le tracé de la courbe de température, la détermination de la pente de celle-ci, la détection de changement de pente, le calcul de l'intégrale de cette courbe de température, ainsi que la comparaison de la valeur de cette intégrale à une valeur de consigne sont effectués par un automate programmable.

De préférence, l'automate programmable est relié, d'une part, à des appareils pour mesurer la température des récipients supérieur et inférieurs, et d'autre part, à des moyens pour vider ces récipients

La description qui va suivre est relative à la fermentation de graines de cacoyer comme exemple de produits subissant une fermentation anaérobie puis aérobie. Elle doit être lue au regard des figures annexées, parmi lesquelles :

– la figure 1 représente, en vue latérale, un schéma d'une installation pour la fermentation de graines selon la présente invention; et

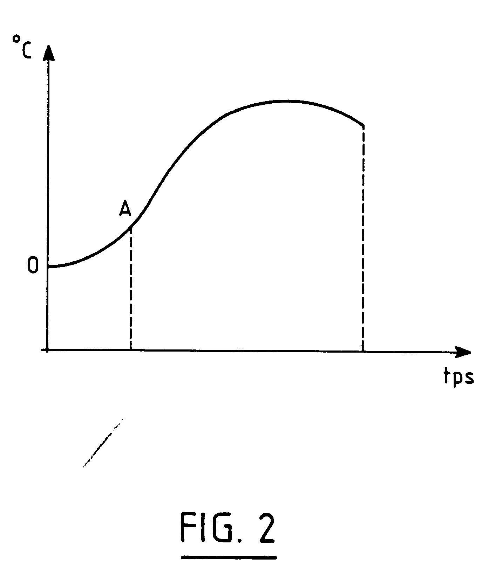

– la figure 2 représente la courbe de température de la fermentation des graines de cacaoyer en fonction du temps.

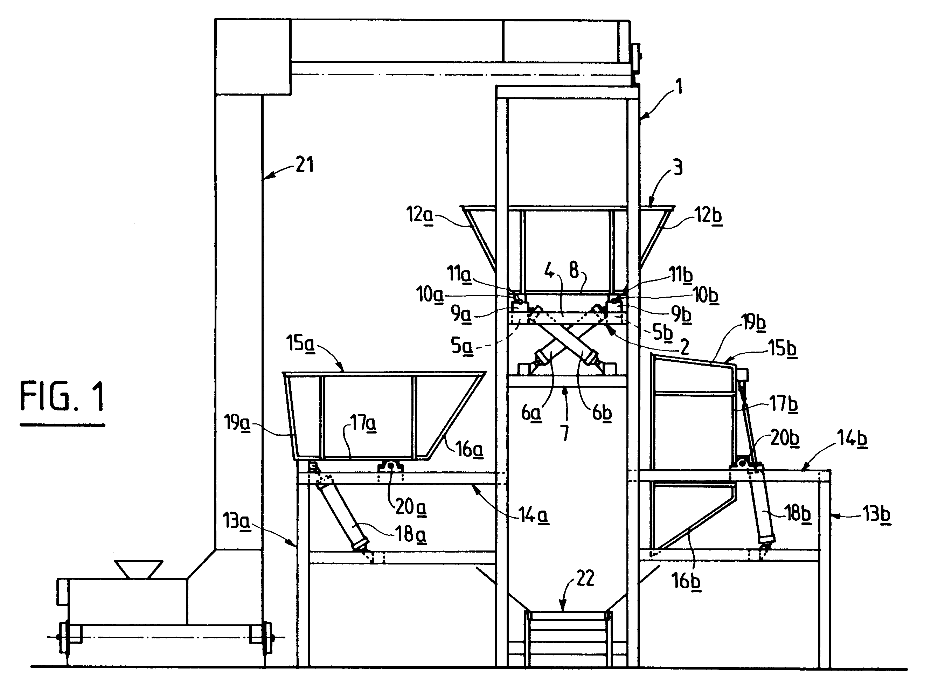

Comme représenté sur la figure 1, une installation pour la fermentation de graines de cacaoyer, ou fèves de cacao, comprend une structure centrale désignée dans son ensemble par la référence 1. Cette structure haute comporte, vers son sommet, une table dite table supérieure 2, sur laquelle est disposé un récipient 3 dit récipient supérieur.

La table supérieure 2 est constituée par deux barreaux transversaux 4 et deux barreaux longitudinaux 5a, 5b, solidaires des premiers; les barreaux transversaux et longitudinaux sont solidaires de la structure centrale 1.

Sous la table supérieure 2 sont disposés deux vérins, par exemple hydrauliques, 6a et 6b, qui forment une croix en vue latérale, Une extrémité de chaque vérin est solidaire de la structure centrale 1 par l'intermédiaire d'un système d'entretoises 7; leur autre extrémité est fixée sous le récipient 3 à proximité d'une arête, ou bord, du fond 8 de ce récipient supérieur 3.

Près de ces arêtes, sont disposés des profilés longitudinaux 9a et 9b, par exemple sur les barreaux longitudinaux 5a et 5b. Ces profilés longitudinaux comportent chacun une saignée 10a et 10b respectivement.

Sous le fond 8 du récipient supérieur 3, est situé un axe de rotation, 11a, 11b, à proximité de chacune des arêtes ci-dessus. Lorsque le récipient supérieur 3 repose sur la table supérieure 2, les axes de rotation 11a et 11b, sont situés dans les saignées 10a et 10b respectivement.

Le déploiement du vérin 6 b, par exemple, entraîne le soulèvement de l'axe de rotation 11a hors de la saignée 10a du profilé 9a. Comme dans ce cas, le vérin 6a reste au repos, c'est-à-dire non déployé, l'axe de rotation 11b est maintenu dans la saignée 10b du profilé 9b : en conséquence le récipient supérieur 3 basculera autour de l'axe de rotation 11b.

Le récipient supérieur 3 comprend deux parois latérales 12a et 12b opposées et obliques : elles vont en s'évasant vers le haut à partir du fond 8. Ce récipient supérieur 3 a pour section verticale, celle d'un trapèze isocele. Selon un mode de réalisation de l'invention, la surface du fond 8 est d'environ 1,25 mètre carré, et la hauteur du récipient supérieur 3 est d'environ 0,70 mètre. Le volume d'un tel récipient est d'environ 1,2 mètre cube, Le fond 8 est percé de trous ayant un diamètre d'environ 0,01 mètre et séparés de 0,1 mètre dans toutes les directions. Ces trous ont pour but de permettre l'écoulement des jus produits par la fermentation.

L'installation selon la présente invention comprend également deux structures latérales, respectivement 13a et 13b, disposées de part et d'autre de la structure centrale 1 et sous les parois obliques 12a et 12b du récipient supérieur 3.

Chaque structure latérale 13a et 13b comporte à son sommet une table dite table inférieure 14a et 14b, qui est identique à la table supérieure 2. Sur chaque table inférieure est disposé un récipient dit récipient inférieur 15a et 15b, respectivement.

Chaque récipient inférieur , 15a et 15b, comporte une paroi oblique 16a, 16b, respectivement : celle-ci va en s'évasant vers le haut à partir du fond de chaque récipient inférieur dont la section droite est avantageusement celle d'un trapèze rectangle. Par exemple, un récipient inférieur a un fond dont la surface est d'environ 1,375 mètre carré, une hauteur d'environ 0,70 mètre, et un volume d'environ 1,17 mètre cube. Chaque fond de récipient inférieur est percé de trous de façon identique à celui du fond du récipient supérieur 3. Sous chaque récipient inférieur 15a, 15b, est disposé un vérin, par exemple hydraulique, 18a, 18b respectivement. Le vérin 18a est solidaire par une extrémité de la structure latérale 13a correspondante. L'autre extrémité de ce vérin 13a est solidaire du fond 17a du récipient 15a au voisinage de l'arête formée par ce fond et la paroi 19a opposée à la paroi oblique 16a.

De même, le vérin 18b est solidaire par une extrémité de la structure latérale 13b. Son autre extrémité est solidaire du fond 17b du récipient inférieur 15b au voisinage de l'arête délimitée par ce fond et la paroi 19b opposée à la paroi oblique 16b de ce même récipient 15b.

Sous le fond 17a du récipient 15a, au voisinage de l'arête formée entre ce fond et la paroi oblique 16a, est disposé un axe de rotation 20a parallèlement à cette arête. Cet axe de rotation 20a est solidaire par tout moyen convenable de la table inférieure 14a. De même, sous le fond 17b du récipient 15b est situé un axe de rotation 20b au voisinage de l'arête formée entre ce fond et la paroi oblique 16b : cet axe de rotation 20b est solidaire de la table inférieure 14b par tout moyen convenable.

Dans le présent exemple de réalisation, la paroi oblique 16a, 16b de chaque récipient inférieur 15a, 15b est situé en direction de la structure centrale 1.

Chaque récipient supérieur 3 et inférieur 15a et 15b comportent une sonde (non représentée sur les figures), afin de mesurer la température régnant dans ce récipient. Chaque sonde est reliée à un automate programmable lui-même relié au vérin situé sous chacun des récipients.

Selon une variante de réalisation, chaque récipient supérieur ou inférieur, est constitué par un berceau, par exemple métallique, qui est solidaire du vérin correspondant et articulé sur la table correspondante, et par une caisse reposant dans ce berceau. Chaque caisse, dont la forme est définie par le fait qu'il s'agit d'une caisse supérieure ou inférieure, est réalisée, par exemple, en un produit stratifié à base de résine polyester et de laine de verre; de plus les caisses supérieures sont emboîtables les unes dans les autres, de même que les caisses inférieures.

L'installation selon la présente invention comporte également un dispositif 21 pour alimenter le récipient supérieur 3 en graines de cacaoyer : ce dispositif peut être une bande porteuse ou, comme représenté à la figure 1, un chargeur à godets montés sur rail. A la base de la structure centrale 1 est situé un dispositif d'évacuation 22 dans lequel sont déversées les graines contenues dans les récipients inférieurs 15a et 15b. Le dispositif d'évacuation est selon ce mode de réalisation constitué par une bande transporteuse.

Les graines de cacaoyer une fois extraites des cabosses sont transportées par le dispositif d'alimentation 21 jusque dans le récipient supérieur 3 (étape a). Une fermentation anaérobie se développe ainsi dans ce récipient et on mesure par la sonde la température régnant dans ce récipient. Comme la sonde est reliée à l'automate, ce dernier peut ainsi tracer la courbe de température en fonction du temps (étape b) et en calculer la pente à tout moment (étape c) : lorsque l'automate programmable détermine le changement de pente (A), il commande (étape d) la mise en oeuvre d'un des vérins 6a ou 6b, situé sous le bac supérieur 3. Par exemple, il commande la mise en oeuvre du vérin 6a, ce qui entraîne la rotation du récipient supérieur 3 autour de l'axe de rotation 11a le contenu de ce récipient supérieur est ainsi déversé dans le récipient inférieur 15a.

Grâce à la sonde présente dans ce récipient inférieur 15a, on mesure continûment la température des fèves en fermentation aérobie. L'automate programmable continue de tracer la courbe de température en fonction du temps (étape e) grâce à ces informations et calcule l'intégrale de cette courbe à partir du début (O) de la fermentation anaérobie. Lorsque la valeur de cette intégrale est égale à une valeur de consigne (étape f) correspondant à la qualité de cacao à obtenir, il commande (étape g) le déploiement du vérin 18a et, par là-même, le vidage du récipient inférieur 15a dans le dispositif d'évacuation 22 par basculement de ce récipient.

Comme la durée de la fermentation anaérobie est sensiblement égale à la moitié du temps de la fermentation aérobie, le récipient supérieur 3, qui est rempli automatiquement après avoir été vidé dans l'un des récipients inférieurs, alimente donc alternativement chacun des récipients inférieurs 15a, 15b en fonction des informations reçues et calculées par l'automate programmable.

Ainsi qu'on aura pu le comprendre, une telle installation est d'un coût relativement faible puisque la structure centrale, ainsi que la structure latérale, sont en fait de simples échafaudages et ne nécessitent, pour sa mise en oeuvre et sa surveillance, que la présence d'un technicien : ce dernier peut même surveiller plusieurs installations selon la présente invention.

**Revendications**

1. Installation pour réaliser une fermentation anaérobie suivie d'une fermentation aérobie ou vice-versa, de produits vegétaux ou agricoles, telles que des graines de cacaoyer, caractérisée par le fait qu'elle comprend une structure centrale (1) haute comportant à son sommet une table dite table supérieure (2), et deux structures latérales 13a, 13b de hauteur inférieure à celle de ladite structure centrale (1) et comportant chacune à leur sommet une table dite table inférieure (14a, 14b), ladite table supérieure (2) et lesdites deux tables inférieures (14a, 14b) supportant chacune un récipient dénommé respectivement récipient supérieur (3) et récipient inférieur (15a, 15b), ladite table supérieure (2) comportant des moyens supérieurs pour vider le récipient supérieur (3) dans l'un ou l'autre des récipients inférieurs (15a, 15b) supportés par lesdites tables inférieures (14a, 14b) qui comportent chacune des moyens inférieurs pour vider le récipient inférieur correspondant.

2. Installation selon la revendication 1, caractérisée par le fait qu'elle comporte un dispositif (21) pour alimenter en produit le récipient supérieur (3).

3. Installation selon la revendication 1, caractérisée par le fait qu' elle comporte un dispositif d'évacuation (22) dans lequel sont déversés les contenus des récipients inférieurs (15a, 15b).

4. Installation selon l'une des revendications 1 à 3, caractérisée par le fait que le récipient supérieur comprend deux parois obliques (12a, 12b) se faisant face et s'évasant vers le haut à partir du fond (8) dudit récipient (3).

5. Installation selon la revendication 4, caractérisée par le fait que le récipient supérieur (3) a, pour section verticale, un trapèze sensiblement isocèle.

6. Installation selon l'une des revendications 1 à 5, caractérisée par le fait que chaque récipient inférieur (15b, 15b) comporte une paroi oblique sensiblement parallèle à l'une des parois obliques (12a, 12b) du récipient supérieur (3), et s'évasant vers le haut à partir du fond (17a, 17b) dudit récipient inférieur (15a, 15b).

7. Installation selon la revendication 6, caractérisée par le fait que chaque récipient inférieur (15a, 15b), a pour section verticale, un trapèze sensiblement rectangle.

8. Installation selon les revendications 1 à 7, caractérisée par le fait que les moyens supérieurs pour vider le récipient supérieur (3) dans l'un ou l'autre des récipients inférieurs (15a, 15b), comprennent, d'une part, deux vérins (6a, 6b) qui sont solidaires par une extrémité de la strucutre centrale (1) haute et, par leur autre extrémité, du fond §8) dudit récipient supérieur (3) au voisinage de l'arête formée par ledit fond (8) et l'une des parois obliques (12a, 12b), lesdits vérins (6a, 6b) étant disposés en croix, et, d'autre part deux axes de rotation (11a, 11b) parallèles à ces mêmes arêtes et disposés sous le fond (8) dudit récipient supérieur (3).

9. Installation selon la revendication 8, caractérisée par le fait que l'extrémité" de chaque vérin (6a, 6b) qui est solidaire du fond (8) du récipient supérieur (3), est en fait solidaire d'un axe de rotation (11a, 11b) lequel repose dans un profilé (9a, 9b) creux situé sur la structure centrale haute (1).

10. Installation selon les revendications 1 à 9, caractérisée par le fait que les moyens inférieurs pour vider un récipient inférieur (15a, 15b), comportent, d'une part, un axe de rotation (20a, 20b) disposé sous le fond (17a, 17b) dudit récipient (15a, 15b) au voisinage de l'arête formée par ledit fond (17a, 17b) et la paroi oblique (16a, 16b), et solidaire dudit fond et de la table inférieure (14a, 14b), et, d'autre part, un vérin (18a, 18b) solidaire par une extrémité, de la structure latérale (13a, 13b) correspondante et, par l'autre extrémité, du fond dudit récipient au voisinage de l'arête opposée à celle proche de l'axe de rotation.

11. Installation selon la revendication 1 à 10, caractérisée par le fait que les récipients supérieur (3) et inférieurs (15a, 15b), comportent chacun, au moins une sonde thermométrique reliée à un automate programmable calculant l'intégrale de la courbe de température en fonction du temps ledit automate programmable déclenchant les moyens supérieurs et inférieurs pour vider les récipients correspondants, lorsque l'intégrale atteint une valeur prédéterminée.

12. Installation selon l'une des revendications 1 à 11, caractérisée par le fait que les récipients supérieur (3) et inférieurs (15a, 15b) sont constitués chacun par un berceau solidaire du ou des vérins correspondants et articulé sur la table correspondante, et par une caisse reposant dans ledit berceau.

13. Installation selon les revendications 1 à 12, caractérisée par le fait que le dispositif (21) pour alimenter le récipient supérieur est constitué par une bande transporteuse ou par un chargeur élévateur à godets montés sur rail.

14. Installation selon les revendications 1 à 13, caractérisée par le fait que le dispositif pour évacuer (22) les produits contenus dans les récipients inférieurs est situé à la base de la structure centrale (1).

15. Procédé pour réaliser une fermentation anaérobie suivie d'une fermentation aérobie, ou vice-versa, de produits végétaux ou agricoles, notamment des graines de cacaoyer, caractérisé par le fait qu'il comprend les étapes suivantes :

a) On dispose dans un récipient, dit récipient supérieur (3), une masse de produits dont on mesure continûment la température;

b) on trace la courbe de cette température en fonction du temps;

c) on détermine à tout moment la pente de cette courbe afin d'en détecter le changement de pente (A) ;

d) la détection du changement de pente (A) commande le vidage dudit récipient supérieur (3) dans un autre récipient dit recipient inférieur (15a, 15b) dans lequel on mesure continûment la température de la masse de produit;

e) on poursuit le tracé de la courbe de température de l'étape b), et on calcule à tout moment l'intégrale de cette courbe depuis le début dudit procédé;

f) on compare la valeur de cette intégrale à une valeur de consigne caractérisant la qualité recherchée du produit; et

g) on vide le récipient inférieur (15a, 15b) dans un dispositif d'évacuation (22), lorsque la valeur de l'intégrale calculée à l'étape f) atteint la valeur de consigne.

16. Procédé selon la revendication 15, caractérisé par le fait que le tracé de la courbe de température, la détermination de la pente de celle-ci, la détection de changement de pente, le calcul de l'intégrale de cette courbe de température, ainsi que la comparaison de la valeur de cette intégrale à une valeur de consigne sont effectués par un automate programmable.

17. Procédé selon la revendication 15 ou 16, caractérisé par le fait que l'automate programmable est relié, d'une part, à des appareils pour mesurer la température des récipients supérieur (3) et inférieurs (15a, 15b), et d'autre part, à des moyens pour vider lesdits récipients.

18. Procédé selon la revendication 17, caractérisé par le fait que l'automate programmable est également relié à un dispositif pour alimenter en produit le récipient supérieur (3).

## Patentansprüche

1. Anlage zur Gärung von pflanzlichen oder landwirtschaftlichen Produkten, wie Kakaobohnen, wobei auf eine Gärung ohne Sauerstoff eine Gärung mit Sauerstoff folgt oder umgekehrt, dadurch gekennzeichret, daß sie einer hochgelegenen mittleren Abschnitt ( 1 ), welcher an seinem oberen Ende eine obere Tischplatte ( 2 ) aufweist, und zwei niedrigere seitliche Abschnitte ( 13a, 13b ), welche jeweils an ihrem oberer Ende eine untere Tischplatte ( 14a, 14b ) aufweisen, umfaßt, wobei die obere Tischplatte ( 2 ) einer oberer Behälter ( 3 ) und die beider unteren Tischplatten ( 14a, 14b ) jeweils einen unterer Behälter ( 15a, 15b ) tragen, und wobei die obere Tischplatte ( 2 ) höher gelegene Elemente zum Leerer des oberen Behälters ( 3 ) in einen der unteren Behälter ( 15a, 15b ) und die unteren Tischplatten ( 14a, 14b ) jeweils niedriger gelegene Elemente zum Leerer des entsprechenden unterer Behälter ( 15a, 15b ) aufweisen.

2. Anlage nach Anspruch 1, dadurch gekennzeichnet, daß sie eine Vorrichtung ( 21 ) zum Beschicker des oberer Behälters ( 3 ) mit einem Produkt aufweist.

3. Anlage nach Anspruch 1, dadurch gekennzeichnet, daß sie eine Austragsvorrichtung ( 22 ) aufweist, in die die Inhalte der unteren Behälter ( 15a, 15b ) entleerbar sind.

4. Anlage nach einem der Ansprüche 1 bis 3, dadurch gekennzeichent, daß der obere Behälter ( 3 ) zwei schräge Wände ( 12a, 12b ) aufweist, die sich gegenüber liegen und vom Boden ( 8 ) des Behälters ( 3 ) nach ober hin weiten.

5. Anlage nach Anspruch 4, dadurch gekennzeichnet, daß der obere Behälter ( 3 ) als vertikalen Abschnitt ein gleichschenkliges Trapez aufweist.

6. Anlage nach einem der Ansprüche 1 bis 5, dadurch gekennzeichent, daß jeder untere Behälter ( 15a, 15b ) eine schräge Wand ( 16a, 16b ) aufweist, die zu einer der schräger Wände ( 12a, 12b ) des oberer Behälters ( 3 ) parallel verläuft und sich vom Boden ( 17a, 17b ) des unteren Behälters ( 15a, 15 b ) nach oben hin weitet.

7. Anlage nach Anspruch 6, dadurch gekennzeichnet, daß jeder untere Behälter ( 15a, 15b ) als vertikaler Abschritt ein rechtwinkliges Trapez aufweist.

8. Anlage nach einem der Ansprüche 1 bis 7, dadurch gekennzeichnet, daß die höher gelegenen Elemente zum Leeren des oberen Behälters ( 3 ) in einen der unteren Behälter ( 15a, 15b ) zum einen zwei hydraulische Kraftzylinder ( 6a, 6b ) umfassen, welche an einem Ende mit dem hochgelegenen mittleren Abschnitt ( 1 ) und am anderen Ende mit dem Boden ( 8 ) des oberen Behälters ( 3 ) nahe der vom Boden ( 8 ) und einer der schrägen Wände ( 12a, 12b ) gebildeten Kante verbunden sowie kreuzweise zueinander angeordnet sind, und zum anderen zwei Drehachsen ( 11a, 11b ), welche zu der genannten Kanten parallel verlaufen und sich unter dem Boden ( 8 ) des oberen Behälters ( 3 ) befinden.

9. Anlage nach Anspruch 8, dadurch gekennzeichnet, daß das mit dem Boden ( 8 ) des oberen Behälters ( 3 ) verbundene Ende jedes Kraftzylinders ( 6a, 6b ) mit einer der Drehachser ( 11a, 11b ) verbunden ist, wobei die Drehachsen ( 11a, 111b ) in einem am hochgelegenen mittleren Abschnitt ( 1 ) angeordneten Hohlprofil ( 9a, 9b ) lagern.

10. Anlage nach einem der Ansprüche 1 bis 9, dadurch gekennzeichnet, daß die niedriger gelegenen Elemente zum Leeren eines unteren Behälters ( 15a, 15b ) zum einen eine Drehachse ( 20a, 20b ), welche unter dem Boden ( 17a, 17b ) des entsprechenden Behälters ( 15a, 15b ) nahe der vom Boden ( 17a, 17b ) und der schrägen Wand ( 16a, 16b ) gebildeten Kante angeordnet und mit dem Boden ( 17a, 17b ) und der unteren Tischplatte ( 14a, 14b ) verbunden ist, aufweisen und zum anderen einer Kraftzylinder ( 18a, 18b ), welcher an einem Ende mit dem entsprechenden seitlichen Abschritt ( 13a, 13b ) und an dem anderen Ende mit dem Boden ( 17a, 17b) des Behälters ( 15a, 15b ) nahe der der Drehachse ( 20a, 20b )abgewandten Kante verbunden ist.

11. Anlage nach einem der Ansprüche 1 bis 10, dadurch gekennzeichnet, daß der obere Behälter ( 3 ) und die unteren Behälter ( 15a, 15b ) jeweils mindestens eine Temperaturmeßsonde aufweisen, welche an einen programmierbarer Automaten angeschlossen ist, der das Integral der Temperatur/Zeit-Kurve berechnet und die höher und niedriger liegenden Elemente zum Leeren der entsprechenden Behälter ausklinkt, wenn das Integral einen vorbestimmter Wert erreicht.

12. Anlage nach einem der Ansprüche 1 bis 11, dadurch gekennzeichnet, daß der obere Behälter ( 3 ) und die unteren Behälter ( 15a, 15b ) jeweils von einer mit dem oder den entsprechenden Kraftzylindern verbundenen und in die entsprechende Tischplatte eingefügten Wiege sowie einem in der Wiege ruhenden Kübel gebildet sind.

13. Anlage nach einem der Ansprüche 1 bis 12, dadurch gekennzeichnet, daß die Beschickungsvorrichtung ( 21 ) für den oberen Behälter ( 3 ) ein Transportband oder ein Förderaufzug mit auf einer Schiene montierten Bechern ist.

14. Anlage nach einem der Ansprüche 1 bis 13, dadurch gekennzeichnet, daß die Austragsvorrichtung ( 22 ) für die in den unteren Behältern ( 15a, 15b ) befindlichen Produkte am Fuß des mittleren Abschnitts ( 1 ) angeordnet ist.

15. Verfahren zur Ausführung einer Gärung von pflanzlichen oder landwirtschaftlichen Produkten, insbesondere Kakaobohren, wobei auf eine Gärung ohne Sauerstoff eine Gärung mit Sauerstoff folgt oder umgekehrt, dadurch gekennzeichnet, daß es folgende Schritte umfaßt:

a) man füllt in einen oberen Behälter ( 3 ) eine Produktmasse ein, wovon man kontinuierlich die Temperatur mißt;

b) man zeichnet die Temperaturkurve in Abhängigkeit vor der Zeit auf;

c) man bestimmt zu jeder Zeit die Steigung dieser Kurve, um deren Wendepunkt ( A ) zu entdecken;

d) die Entdeckung des Wendepunktes ( A ) bewirkt die Leerung des oberen Behälters ( 3 ) in einen unteren Behälter ( 15a, 15b ), in dem man kontinuierlich die Temperatur der Produktmasse mißt;

e) man verfolgt die Aufzeichnung der Temperaturkurve des Schrittes b) und man berechnet in jedem Augenblick das Integral dieser Kurve seit Beginn des Verfahrens;

f) man vergleicht der Wert dieses Integrals mit einem Sollwert, der die gewünschte Qualität des Produktes charakterisiert; und

g) man leert der unteren Behälter ( 15a, 15b ) in eine Austragsvorrichtung ( 22 ), wenn der Wert des berechneten Integrals beim Schritt f) den Sollwert erreicht.

16. Verfahren nach Anspruch 15, dadurch gekennzeichnet, daß die Aufzeichnung der Temperaturkurve, die Bestimmung der Steigung derselben, die Entdeckung des Wendepunktes, die Berechnung des Integrals dieser Temperaturkurve sowie der Vergleich des Wertes dieses Integrals mit einem Sollwert mittels eines programmierbaren Automaten erfolgen.

17. Verfahren nach Anspruch 15 oder 16, dadurch gekennzeichnet, daß der programmierbare Automat einerseits an Apparate zur Messung der Temperatur vor oberem Behälter ( 3 ) und unterem Behälter ( 15a, 15b ) angeschlossen wird und andererseits an Elemente zum Leerer der genannten Behälter.

18. Verfahren nach Ansprch 17, dadurch gekennzeicht, daß der programmierbare Automat gleichfalls an eine Vorrichtung ( 21 ) zum Beschicken des oberen Behälters ( 3 ) mit einem Produkt angeschlossen ist.

**Claims**

1. An installation for carrying out an anaerobic fermentation followed by an aerobic fermentation or <u>vice versa</u>, of vegetable or agricultural products, such as cocoa beans, characterised in that it comprises a high central structure (1) comprising at its top a table called upper table (2) and two lateral structures (13a, 13b) of lesser height than that of the said central structure (1) and each comprising at its top a table called lower table (14a, 14b), the said upper table (2) and the said two lower tables (14a, 14b) each supporting a vessel respectively called upper vessel (3) and lower vessel (15a, 15b), the said upper table (2) comprising upper means for emptying the upper vessel (3) into one or the other of the lower vessels (15a, 15b) supported by the said lower tables (14a, 14b) which each comprise lower means for emptying the corresponding lower vessel.

2. An installation according to Claim 1 characterised in that it comprises a device (21) for feeding the upper vessel (3) with produce.

3. An installation according to Claim 1, characterised in that it comprises a discharge device (22) into which the contents of the lower vessels (15a, 15b) are tipped.

4. An installation according to any one of Claims 1 to 3, characterised in that the upper vessel comprises two oblique walls (12a, 12b) facing one another and opening out upwards from the bottom (8) of the said vessel.

5. An installation according to Claim 4, characterised in that the upper vessel (3) has, as its vertical section, a substantially isosceles trapezium.

6. An installation according to any one of Claims 1 to 5, characterised in that each lower vessel (15a, 15b) comprises an oblique wall substantially parallel to one of the oblique walls (12a, 12b) of the upper vessel (3) and opening out upwards from the bottom (17a, 17b) of the said lower vessel (15a, 15b).

7. An installation according to Claim 6, characterised in that each lower vessel (15a, 15b) has a substantially rectangular trapezium as its vertical section.

8. An installation according to Claims 1 to 7, characterized in that the upper means for emptying the upper vessel (3) into the one or the other of the lower vessels (15a, 15b) comprise for the one part two jacks (6a, 6b) which are fixed at one end to the high central structure (1) and at the other end to the bottom (8) of the said upper vessel (3) in the vicinity of the edge formed by the said bottom (8) and one of the oblique walls (12a, 12b), the said jacks (6a, 6b) being disposed crosswise, and for the other part two rotary spingles (11a, 11b) parallel to these same edges, and disposed beneath the bottom (8) of the said upper vessel (3).

9. An installation according to Claim 8, characterised in that the extremity of each jack (6a, 6b) which is fast with the bottom (8) of the upper vessel (3) is in fact fast with a rotary spindle (11a, 11b) which rests in a hollow section (9a, 9b) situated on the high central structure (1).

10. An installation according to Claims 1 to 9, characterised in that the lower means for emptying a lower vessel (15a, 15b) comprise for the one part a rotary spindle (20a, 20b) disposed under the bottom (17a, 17b) of the said vessel (15a, 15b) in the vicinity of the edge formed by the said bottom (17a, 17b) and the oblique wall (16a, 16b), and fixed to the said bottom and the lower table (14a, 14b), and for the other part a jack (18a, 18b) fixed at one extremity to the corresponding lateral structure (13a, 13b), and at the other extremity to the bottom of the said vessel in the vicinity of the edge opposite that close to the rotary spindle.

11. An installation according to Claims 1 to 10, characterised in that the vessels, upper (3) and lower (15a, 15b), each comprise at least one thermometer probe connected to a programmable automaton calculating the integral of the temperature curve as a function of time, the said programmable automaton triggering the upper and lower means to empty the corresponding vessels when the integral reaches a pre-determined value.

12. An installation according to any one or Claims 1 to 11, characterised in that the upper and lower vessels (3) and (15a, 15b) are constituted each by a cradle fast with the corresponding jack or jacks and articulated on the corresponding table, and by a box resting in the said cradle.

13. An installation according to Claims 1 to 13, characterised in that the device (21) for feeding the upper vessel is constituted by a conveyor belt or by a rail-mounted bucket elevator-charger.

14. An installation according to Claims 1 to 13, characterised in that the device for discharging (22) the products contained in the lower vessels is situated at the base of the central structure (1).

15. A process for carrying out an anaerobic fermentation followed by an aerobic fermentation, or vice versa, of vegetable or agricultural products, especially of cocoa beans, characterised in that it comprises the following stages :

a) A mass of produce the temperature of which is continuously measured is disposed in a vessel, called upper vessel (3);

b) the curve of this temperature is traced as a function of time;

c) the slope of this curve is determined at every moment in order to detect its change of slope (A);

d) the detection of the change of slope (4) controls the emptying of the said upper vessel (3) into another vessel called lower vessel (15a, 15b) in which the temperature of the mass of produce is continuously measured;

e) the trace of the temperature curve of stage b) is continued and at every moment the integral of this curve from the beginning of the said process is calculated;

f) the value of this integral is compared with a reference value characterising the desired quality of the produce; and

g) the lower vessel (15a, 15b) is emptied into a discharge device (22), when the value of the calculated integral at stage f) reaches the reference value.

16. A process according to Claim 15, characterised in that the trace of the temperature curve, the determination of the slope thereof, the detection of change of slope, the calculation of the integral of this temperature curve, and the comparison of the value of this integral with a reference value are effected by a programmable automaton.

17. A process according to Claim 15 or 16, characterised in that the programmable automaton is connected for the one part to apparatus for measuring the temperature of the upper vessel (3) and lower vessels (15a, 15b), and for the other part to means for emptying the said vessels.

18. A process according to Claim 17, characterised in that the programmable automaton is likewise connected to a device for feeding the upper vessel (3) with produce.

FIG. 1

EP 0 343 078 B1

°C

A

O

tps

FIG. 2